# EUROPÄISCHE PATENTSCHRIFT

(11) **EP 1 664 608 B1**
(45) Veröffentlichungstag und Bekanntmachung des Hinweises auf die Patenterteilung: **26.03.2008**
(21) Anmeldenummer: 05774592.9
(22) Anmeldetag: 30.06.2005
(51) Int. Cl.: F16L 9/147

(54) **LEITUNGSROHR ZUM TRANSPORT VON MEDIEN**
CONDUIT FOR CONVEYING MEDIA
CONDUITE POUR LE TRANSPORT DE MILIEUX

(30) Priorität: 02.07.2004 DE 102004032028; 19.05.2005 DE 102005023751
(43) Veröffentlichungstag der Anmeldung: 07.06.2006
(73) Patentinhaber: KME Germany AG, 49023 Osnabrück (DE)
(72) Erfinder: MELCHER, Walter, 49545 Tecklenburg (DE); REITER, Ulrich, 49074 Osnabrück (DE); GEYER, Christoph, 49076 Osnabrück (DE); TRIQUET, Christian, 49143 Bissendorf (DE); KONCZALLA, Matthias, 49090 Osnabrück (DE)
(74) Vertreter: Griepenstroh, Jörg
(86) Internationale Anmeldenummer: PCT/DE2005/001152
(87) Internationale Veröffentlichungsnummer: WO 2006/005297

(56) Entgegenhaltungen:
- EP-A2- 1 416 216
- WO-A1-99/31424
- DE-A1- 3 118 743
- DE-A1- 10 115 011
- US-A1- 2002 005 223

## Beschreibung

Die Erfindung betrifft ein Leitungsrohr zum Transport von Medien gemäß den Merkmalen im Oberbegriff des Anspruchs 1.

Ein solches Leitungsrohr zählt durch die EP 0 762 041 B1 zum Stand der Technik. Das metallische Kernrohr besteht hierbei aus Kupfer. Die Ummantelung wird aus einem thermoplastischen Kunststoff wie Polymethylen gebildet. Die Wanddicke des Kernrohrs beträgt bei einem im Bereich von 10 mm bis 22 mm liegenden Außendurchmesser 0,5 mm bis 1 mm. Die Wanddicke der Ummantelung kann zwischen 0,3 mm und 1,5 mm liegen.

Das bekannte Leitungsrohr wird insbesondere für Fußbodenheizungssysteme eingesetzt.

Obgleich das bekannte Leitungsrohr Eingang in die Praxis gefunden hat, haftet ihm die Eigenschaft an, das das Kernrohr eine vergleichsweise große Wanddicke aufweisen muss, damit es ohne quer einzuknicken mit den gewünschten Radien gebogen werden kann. Die zulässigen Biegeradien hängen im Wesentlichen von dem Verhältnis der Wanddicke des Kernrohrs zu seinem Außendurchmesser ab. Die Wanddicke des Kernrohrs bedingt dann z.B. bei einem Fußbodenheizungssystem einen großen Anteil au edlem Kupfer, wodurch nicht nur die Materialkosten, sondern auch das Gewichts eines zu handhabenden, insbesondere als Coil bereit gestellten, Leitungsrohrs merklich erhöht werden. Das Handling eines solchen Coils ist schwierig und das Biegen des Leitungsrohrs erfordert außerdem hohe Biegekräfte.

Als weitere Eigenart des bekannten Leitungsrohrs ist anzumerken, dass die thermoplastische Ummantelung das Kernrohr lediglich umhüllt und mit diesem nicht anhaftend verbunden ist. Wenn die Enden zweier Leitungsrohre verbunden werden müssen, ist es erforderlich, hier die Ummantelung zu entfernen. Insbesondere bei erdverlegten Leitungsrohren kann dann außerdem im Verbindungsbereich Feuchtigkeit zwischen das Kernrohr und die Ummantelung gelangen und dadurch Korrosionen herbeiführen.

Der Erfindung liegt - ausgehend vom Stand der Technik - die Aufgabe zugrunde, ein Leitungsrohr zum Transport von Medien zu schaffen, bei welchem der Einsatz an Kupfer deutlich reduziert und die Handhabbarkeit bei seiner Verlegung erleichtert werden kann.

Diese Aufgabe wird mit den im kennzeichnenden Teil des Anspruchs 1 angegebenen Merkmalen gelöst.

Ein wesentliches Konstruktionsmerkmal besteht darin, dass nunmehr zur Bildung der Ummantelung gezielt ein Kunststoff aus der Gruppe der Polyolefine mit funktionalen Gruppen verwendet wird. Unpolare Werkstoffe, wie Polyolefine, gehen keine adhesive Verbindungen mit anderen Werkstoffen, wie z.B. Metallen, ein. Durch die Einbindung geeigneter funktionaler Gruppen, die bei erhöhten Temperaturen mit den polaren Oberflächen reagieren und hohe chemische Bindungskräfte bilden, wird erreicht, dass die Ummantelung eine adhesive Verbindung mit der Oberfläche des Kernrohrs eingeht. Durch den kraftschlüssigen Verbund der Ummantelung mit dem Kernrohr wird ein Leitungsrohr mit großer Widerstandskraft gegenüber äußerer mechanischer Einwirkung und mit besonders guter Biegbarkeit geschaffen. Außerdem werden hierdurch ein guter Wärmeübergang sowie eine hohe Korrosionsbeständigkeit gewährleistet

Durch die gezielte Wanddickenbemessung der Ummantelung und des Kernrohrs sowie durch die Einstellung des Verhältnisses der Dicke der Wand des Kernrohrs zu seinem Innendurchmesser wird ein gutes Biegeverhalten erreicht, weil das plastische und elastische Verhalten der verwendeten Werkstoffe in ein bestimmtes Verhältnis gebracht werden kann. Die äußerst geringe Dicke der Wand des Kernrohrs zwischen 0,15 mm und 0,5 mm führt zu einer deutlichen Verringerung des Gesamtgewichts, wodurch große Coillängen handhabbar sind. Größere Coillängen bedeuten, z.B. bei der Verlegung von Fußbodenheizungssystemen, weniger Verbindungsstellen und damit auch weniger Restlängen. Das Leitungsrohr kann problemlos, und zwar ohne zusätzliche Hilfsmittel, von Hand von einem Coil abgewickelt werden. Die Biegefähigkeit ist exzellent mit nur geringen Rückstellkräften.

Die adhesive Verbindung der Ummantelung mit dem dünnwandigen Kernrohr ermöglicht es darüber hinaus, ein Leitungsrohr auf einfache Weise mit einer Trennzange oder einer Trennschere spanlos abzuteilen. Ein Verquetschen mit Veränderung des Querschnitts wird sicher unterbunden.

Es gelangen bevorzugt Kernrohre mit einem Außendurchmesser zwischen 10 mm und 22 mm und einer Wanddicke zwischen 0,15 mm und 0,5 mm zum Einsatz. Die Ummantelung kann hierbei eine Wanddicke zwischen 1,0 mm und 2,5 mm aufweisen.

Schließlich wäre noch anzuführen, dass das erfindungsgemäße Leitungsrohr recyclefähig ist, weil kein vernetztes Polyolefin zum Einsatz gelangt.

Das erfindungsgemäße Leitungsrohr kann als Trinkwasser-, Fußboden- oder Heizungsrohr bei der Hausinstallation eingesetzt werden. Denkbar ist auch eine Verwendung für Bewässerungsanlagen. Ferner kann es bei Wärmeaustauschern, Verdampfern und Verflüssigern eingesetzt werden. Darüber hinaus ist es möglich, das Leitungsrohr für den Transport von Gasen, Wasser, Öl oder Kältemittel einzusetzen.

Eine besonders vorteilhafte Weiterbildung der Erfindung besteht in den Merkmalen des Anspruchs 2. Danach beträgt das Verhältnis der Dicke der Wand der Ummantelung zur Dicke der Wand des Kernrohrs 3:1 bis 7:1.

Da das Kernrohr aus Kupfer oder einer Kupferlegierung besteht, sind durch die Werkstoffpaarung Kupfer und Polyolefin geringe Wärmedurchlasswiderstände gegeben, so dass der Einsatz des Leitungsrohrs zu Wärmeübertragungszwecken sehr effektiv ist. Das Kernrohr ist bevorzugt nahtlos gezogen.

Das Kernrohr ist aus Kupfer oder einer Kupferlegierung und auf seiner äußeren Oberfläche verzinnt. Hiermit werden besonders gute Voraussetzungen für fest und dauernd haftende Verklebungen zwischen der Ummantelung und dem Kernrohr geschaffen.

Das Kernrohr ist auch auf seiner inneren Oberfläche verzinnt. Dieses auf der inneren Oberfläche verzinnte Rohr, kann nach Anspruch 3 auch längsgeschweißt sein.

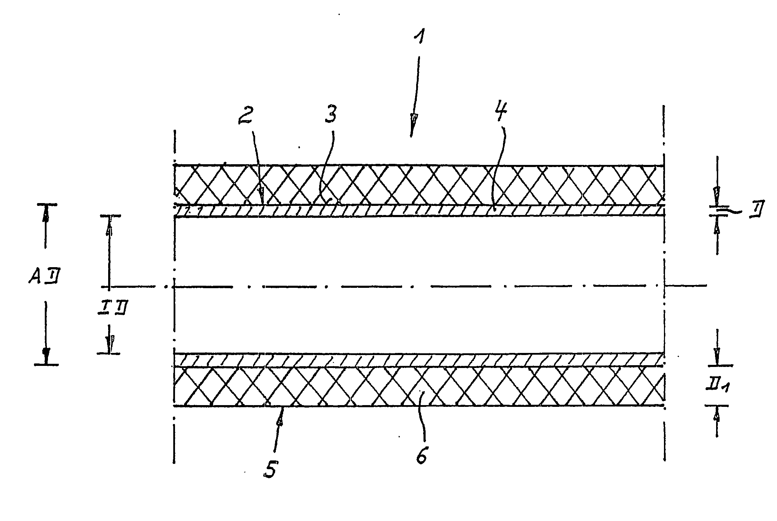

Die Erfindung ist nachfolgend anhand eines in der Zeichnung dargestellten Ausführungsbeispiels näher erläutert.

Veranschaulicht ist ein Längenabschnitt eines Leitungsrohrs 1, das zur Installation einer Fußbodenheizung verwendet wird.

Das Leitungsrohr 1 umfasst ein Kernrohr 2 aus einer Kupferlegierung. Die äußere Oberfläche 3 des Kernrohrs 2 ist verzinnt.

Die Dicke D der Wand 4 des Kernrohrs 2 beträgt 0,3 mm. Sein Außendurchmesser AD beläuft sich auf 12 mm, so dass der Innendurchmesser ID 11,4 mm beträgt.

Auf das Kernrohr 2 ist eine Ummantelung 5 aufgebracht, die aus einem Kunststoff aus der Gruppe der Polyolefine mit funktionalen Gruppen gebildet ist. Dadurch geht die Ummantelung 5 eine adhäsive Verbindung mit der äußeren Oberfläche 3 des Kernrohrs 2 ein. Die Dicke D₁ der Wand 6 der Ummantelung 5 beträgt 2 mm.

Aufgrund dieser Abmessungen beträgt das Verhältnis der Dicke D₁ der Wand 6 der Ummantelung 5 zur Dicke D der Wand 4 des Kernrohrs 2 6,7:1, während das Verhältnis der Dicke D der Wand 4 des Kernrohrs 2 zu seinem Innendurchmesser ID 0,03 beträgt.

### Bezugszeichen:

1 - Leitungsrohr
2 - Kernrohr v. 1
3 - Oberfläche v. 2
4 - Wand v. 2
5 - Ummantelung
6 - Wand v. 5

D - Dicke v. 4
AD - Außendurchmesser v. 2
ID - Innendurchmesser v. 2
D₁ - Dicke v. 6

## Patentansprüche

1. Leitungsrohr zum Transport von Medien, das aus einem Kernrohr (2) aus Kupfer oder einer Kupferlegierung und einer Ummantelung (5) aus einem thermoplastischen Kunststoff besteht, wobei die Ummantelung (5) aus einem Kunststoff aus der Gruppe der Polyolefine mit funktionalen Gruppen gebildet ist, wobei das Verhältnis der Dicke (D1) der Wand (6) der Ummantelung (5) zur Dicke (D) der Wand (4) des Kernrohrs (2) 2:1 bis 14:1 und das Verhältnis der Dicke (D) der Wand (4) des Kernrohrs (2) zu seinem Innendurchmesser (ID) 0,01 bis 0,05 beträgt, **dadurch gekennzeichnet, dass** das Polyolefin nicht vernetzt ist und dass das Kernrohr (2) auf seiner äußeren und inneren Oberfläche (3) verzinnt ist.

2. Leitungsrohr nach Anspruch 1, **dadurch gekennzeichnet, dass** das Verhältnis der Dicke (D1) der Wand (6) der Ummantelung (5) zur Dicke (D) der Wand (4) des Kernrohrs (2) 3:1 bis 7:1 beträgt.

3. Leitungsrohr nach Anspruch 1 oder 2, **dadurch gekennzeichnet, dass** das Kernrohr (2) längsgeschweißt ist.

## Claims

1. Conduit pipe for conveying media, which consists of a core pipe (2) made of copper or a copper alloy and a jacket (5) made of a thermoplastic material, wherein the jacket (5) is formed from a plastics material from the group of polyolefins with functional groups, the ratio of the thickness (D1) of the wall (6) of the jacket (5) to the thickness (D) of the wall (4) of the core pipe (2) being 2:1 to 14:1 and the ratio of the thickness (D) of the wall (4) of the core pipe (2) to its internal diameter (ID) being 0.01 to 0.05, **characterised in that** the polyolefin is not cross-linked and **in that** the core pipe (2) is tin-plated on its outer and inner surface (3).

2. Conduit pipe according to claim 1, **characterised in that** the ratio of the thickness (D1) of the wall (6) of the jacket (5) to the thickness (D) of the wall (4) of the core pipe (2) is 3:1 to 7:1.

3. Conduit pipe according to claim 1 or 2, **characterised in that** the core pipe (2) is longitudinally welded.

## Revendications

1. Conduite pour le transport de fluide composée d'un tube de base (2) en cuivre ou en un alliage de cuivre et d'une gaine (5) en une matière thermoplastique, la gaine (5) étant réalisée en une matière plastique du groupe des polyoléfines avec des radicaux fonctionnels,
le rapport de l'épaisseur (D1) de la paroi (6) de la gaine (5) à l'épaisseur (D) de la paroi (4) du tube de base (2) est tel que 2/1 à 14/1 et le rapport de l'épaisseur (D) de la paroi (4) du tube de base (2) à son diamètre intérieur (ID) est compris entre 0,01 et 0,05,
**caractérisée en ce que**
la polyoléfine n'est pas réticulée et la surface extérieure et comme la surface intérieure (3) du tube de base (2) sont étamées.

2. Conduite selon la revendication 1,
**caractérisée en ce que**
le rapport de l'épaisseur (D1) de la paroi (6) de la gaine (5) à l'épaisseur (D) de la paroi (4) du tube de base (2) est compris entre 3/1 et 7/1.

3. Conduite selon la revendication 1 ou 2,
**caractérisée en ce que**
le tube de base (2) est soudé longitudinalement.
